# EUROPÄISCHE PATENTSCHRIFT

(11) **EP 4 145 083 B1**
(45) Veröffentlichungstag und Bekanntmachung des Hinweises auf die Patenterteilung: **20.12.2023**
(21) Anmeldenummer: 22188545.2
(22) Anmeldetag: 03.08.2022
(51) Int. Cl.: G01B 5/00, G01B 11/00, G01B 11/26, G01D 5/34, G01D 11/30, G01D 11/24, H01L 31/024

(54) **OPTISCHE EMPFANGSEINHEIT**
OPTICAL RECEIVING UNIT
UNITÉ RÉCEPTRICE OPTIQUE

(30) Priorität: 26.08.2021 DE 102021209393
(43) Veröffentlichungstag der Anmeldung: 08.03.2023
(73) Patentinhaber: Dr. Johannes Heidenhain GmbH, 83301 Traunreut (DE)
(72) Erfinder: MEISSNER, Markus, 83236 Übersee (DE); MITTERREITER, Johann, 83339 Chieming (DE); METZKE, Robert, 83278 Traunstein (DE); STEPPUTAT, Michael, 83278 Traunstein (DE); BIRNBACHER, Stefan, 83454 Anger (DE); KRAUS, Robert, 83308 Trostberg (DE); SCHERER, Manuuel, 83278 Traunstein (DE); EBERL, Markus, 83278 Traunstein (DE); STURM, Robert, 83352 Altenmarkt (DE); HOLZAPFEL, Wolfgang, 83119 Obing (DE); PUCHER, Dr. Wolfgang, 83278 Traunstein (DE); PLETSCHACHER, Bernhard, 83339 Chieming (DE)

(56) Entgegenhaltungen:
- WO-A1-01/02808
- US-A1- 2010 107 786
- US-A1- 2018 024 438
- US-A1- 2019 187 407

## Beschreibung

### GEBIET DER TECHNIK

Die vorliegende Erfindung betrifft eine optische Empfangseinheit, die in einem Positionsmesssystem zur Bestimmung räumlicher Positionsinformationen genutzt werden kann.

### STAND DER TECHNIK

Aus der WO 01/38828 A1 ist ein optisches Positionsmesssystem bekannt, das als räumliches 2D-Winkelmesssystem ausgebildet ist und zur Bestimmung räumlicher Positionsinformationen genutzt werden kann. Dieses umfasst einerseits eine Sendeeinheit, die an einem im Raum beweglichen Messobjekt angeordnet ist, dessen räumliche Position und Orientierung, d.h. dessen Pose zu bestimmen ist; als Sendeeinheit kann z.B. eine geeignete Lichtquelle fungieren. Stationär gegenüber der beweglichen Sendeeinheit sind andererseits ein oder mehrere optische Empfangseinheiten vorgesehen, die im wesentlichen jeweils ein Abtastgitter sowie einen optoelektronischen Detektor aufweisen; weitere Details zu einem geeigneten Aufbau der Empfangseinheiten sind der genannten Druckschrift nicht zu entnehmen. Mit Hilfe eines derartigen Systems kann über eine sogenannte Multiangulation die Pose der Sendeeinheit im Raum bestimmt werden. Hierzu wird von der jeweiligen Empfangseinheit aus gesehen die Richtung der Sichtlinie zur Sendeeinheit über zwei Winkelmessungen bestimmt. Bei einer bekannten Relativposition zweier Empfangseinheiten lässt sich aus dem Schnittpunkt der bestimmten Sichtlinien die Pose der Sendeeinheit ermitteln. Hinsichtlich weiterer Einzelheiten eines derartigen Messprinzips sei ausdrücklich auf die genannte Druckschrift verwiesen.

Ein ähnliches Messsystem ist ferner aus der EP 3 557 182 A1 bekannt; Figur 2 dieser Druckschrift zeigt dabei auch den möglichen Aufbau der eingesetzten optischen Empfangseinheit. Diese besteht aus einer Messzelle mit einer Bodenplatte, auf der der Detektor angeordnet ist; über Abstandshalter ist in einer bestimmten Distanz vom Detektor beabstandet eine Deckplatte mit einem Abtastgitter vorgesehen. Wird eine derartige Messzelle z.B. durch Anschrauben an einem Objekt befestigt, so kann dies eine mechanische Beanspruchung der Messzelle zur Folge haben, die wiederum die Genauigkeit der Positionsbestimmung negativ beeinflusst. So kann aufgrund einer Verformung der Messzelle etwa ein veränderter Abstand zwischen dem Detektor und dem Abtastgitter resultieren. Desweiteren ist möglich, dass es dabei auch zu einer Änderung der lateralen Position zwischen dem Detektor und dem Abtastgitter und/oder zu einer Deformation des Abtastgitters kommt. Ähnliche Effekte können darüber hinaus auch durch Temperaturänderungen verursacht werden.

### ZUSAMMENFASSUNG DER ERFINDUNG

Der vorliegenden Erfindung liegt die Aufgabe zugrunde, eine optische Empfangseinheit für ein Positionsmesssystem zur Bestimmung räumlicher Positionsinformationen anzugeben, bei der auch im Fall mechanischer und/oder thermischer Beanspruchung sichergestellt ist, dass keine Fehlmessungen resultieren.

Diese Aufgabe wird erfindungsgemäß durch eine optische Empfangseinheit mit den Merkmalen des Anspruchs 1 gelöst.

Vorteilhafte Ausführungen der erfindungsgemäßen optischen Empfangseinheit ergeben sich aus den Maßnahmen, die in den abhängigen Ansprüchen aufgeführt sind.

Die erfindungsgemäße optische Empfangseinheit kann in einem Positionsmesssystem zur Bestimmung räumlicher Positionsinformationen genutzt werden. Sie weist eine Messzelle auf, die eine Bodenplatte, eine transparente Deckplatte mit einem Abtastgitter, ein oder mehrere Abstandshalter zwischen der Bodenplatte und der Deckplatte sowie einen optoelektronischen Detektor umfasst, dessen lichtempfindliche Fläche in Richtung der Deckplatte orientiert ist. Der Detektor ist über ein selbstzentrierendes Ausgleichselement auf der Bodenplatte der Messzelle angeordnet.

Über die Ausbildung des Ausgleichselements kann sichergestellt werden, dass eine laterale Positionsänderung sowie eine Rotation des Detektors um eine Achse, die senkrecht zur Detektor-Oberfläche orientiert ist, bei Einwirkung von thermischen oder mechanischen Einflüssen auf die Bodenplatte verhindert wird.

Mit Vorteil ist vorgesehen, dass
- das Ausgleichselement aus mehreren aneinandergrenzenden Streben besteht, die einen geschlossenen Flächenbereich umgeben, und
- wobei die Streben jeweils mindestens einen Detektor-Befestigungsbereich sowie mehrere Verjüngungs-Bereiche aufweisen, und
- wobei das Ausgleichselement desweiteren mehrere Messzellen-Befestigungsbereiche aufweist, die jeweils im Grenzbereich benachbarter Streben ausgebildet sind.

Es ist dabei möglich, dass
- das Ausgleichselement über die Messzellen-Befestigungsbereiche oberhalb einer Ausnehmung der Bodenplatte angeordnet ist, und
- das Ausgleichselement vier Streben mit je vier Verjüngungs-Bereichen umfasst, und
- in den Ecken des Ausgleichselements jeweils ein Messzellen-Befestigungsbereich ausgebildet ist, über den das Ausgleichselement benachbart zur Ausnehmung auf der Bodenplatte befestigt ist, und
- jede Strebe einen Detektor-Befestigungsbereich zwischen zwei mittigen Verjüngungs-Bereichen aufweist, und
- jede Strebe desweiteren zwei äußere Verjüngungs-Bereiche benachbart zu den Messzellen-Befestigungsbereichen aufweist.

Ferner kann vorgesehen sein, dass
- das Ausgleichselement über die Messzellen-Befestigungsbereiche mit der Bodenplatte flächig verklebt ist, und
- der Detektor über die Detektor-Befestigungsbereiche mit dem Ausgleichselement flächig verklebt ist.

Vorzugsweise ist die lichtempfindliche Fläche des Detektors in einer Ebene mit derjenigen Seite der Bodenplatte angeordnet, welche in Richtung des Abtastgitters orientiert ist.

In einer vorteilhaften Ausführungsform kann die Messzelle über mehrere Festkörpergelenk-Bipods in einem Montagegehäuse gelagert angeordnet sein, wobei die Festkörpergelenk-Bipods eine kinematisch bestimmte Lagerung der Messzelle im Montagegehäuse gewährleisten.

Hierbei ist möglich, dass
- die Festkörpergelenk-Bipods jeweils zwei Beine umfassen, die mehrere Beinabschnitte sowie mehrere Festkörpergelenke aufweisen, und
- die Festkörpergelenk-Bipods im Verbindungs-Bereich der beiden Beine an der Messzelle und mit den freien Enden der beiden Beine am Montagegehäuse angebunden sind, und
- die Festkörpergelenk-Bipods tangential zum Umfang der Messzelle angeordnet sind.

Mit Vorteil sind die Festkörpergelenk-Bipods jeweils derart ausgebildet, dass zwei translatorische Bewegungsfreiheitsgrade gesperrt sind und lediglich eine Beweglichkeit in Bezug auf einen dritten translatorischen Bewegungsfreiheitsgrad sowie drei rotatorische Bewegungsfreiheitsgrade möglich ist.

Es ist möglich, dass drei Festkörpergelenk-Bipods in Winkelabständen von 120° um das Zentrum der Messzelle herum angeordnet sind, so dass durch das Zusammenwirken der drei Festkörpergelenk-Bipods die Messzelle in keiner Raumrichtung frei beweglich ist.

Als vorteilhaft erweist sich dabei, wenn die Festkörpergelenk-Bipods in Bezug auf die Messzelle jeweils eine höhere Steifigkeit entlang ihrer tangentialen Anordnungsrichtung gegenüber der Steifigkeit in einer hierzu orthogonalen Richtung aufweisen.

Die Festkörpergelenk-Bipods können aus Invar ausgebildet sein.

Vorzugsweise bestehen die Bodenplatte, der mindestens eine Abstandshalter sowie die Deckplatte aus dem gleichen Material.

Weiterhin ist vorteilhaft, wenn das Abtastgitter auf derjenigen Seite der Deckplatte angeordnet ist, die in Richtung des Detektors orientiert ist.

Es kann damit ein optisches Positionsmesssystem zur Bestimmung der Position und Orientierung eines im Raum beweglichen Messobjekts mit mehreren identifizierbaren aufgebaut werden, das ein oder mehrere stationär angeordnete, erfindungsgemäße optische Empfangseinheiten umfasst.

Über die erfindungsgemäßen Maßnahmen ist nunmehr gewährleistet, dass Messfehler bei der räumlichen Positionsbestimmung minimiert werden, die durch mechanische und/oder thermische Einflüsse auf die optische Empfangseinheit resultieren können. Dies wird dadurch erreicht, dass unabhängig von mechanischen und/oder thermischen Einflüssen stets eine stabile Relativposition des Detektors zum Abtastgitter resultiert. Desweiteren werden Verbiegungen des Abtastgitters, des Detektors und der Messzelle vermieden, die ebenfalls zu Messfehlern führen können.

Weitere Einzelheiten und Vorteile der vorliegenden Erfindung seien anhand der nachfolgenden Beschreibung eines Ausführungsbeispiels der erfindungsgemäßen Vorrichtung in Verbindung mit den Figuren erläutert.

### KURZE BESCHREIBUNG DER ZEICHNUNGEN

Es zeigt
- Figur 1: eine schematische Darstellung eines Positionsmesssystem zur Bestimmung räumlicher Positionsinformationen, in dem mehrere erfindungsgemäße optische Empfangseinheiten verwendet werden;
- Figur 2: eine Schnittansicht eines Ausführungsbeispiels der erfindungsgemäßen optischen Empfangseinheit;
- Figur 3: eine perspektivische Teilansicht der Messzelle der optischen Empfangseinheit aus Figur 2;
- Figur 4: eine perspektivische Ansicht des Ausgleichselements aus der Messzelle der optischen Empfangseinheit aus Figur 2;
- Figur 5: eine perspektivische Ansicht der kompletten Messzelle der optischen Empfangseinheit aus Figur 2 in Verbindung mit zwei Festkörpergelenk-Bipods;
- Figur 6a, 6b: eine Seitenansicht sowie eine perspektivische Ansicht eines Festkörpergelenk-Bipods aus der erfindungsgemäßen optischen Empfangseinheit;
- Figur 7a, 7b: Darstellungen zur Erläuterung der Wirkungsweise der Festkörpergelenk-Bipods in der erfindungsgemäßen optischen Empfangseinheit.

### BESCHREIBUNG DER AUSFÜHRUNGSFORMEN

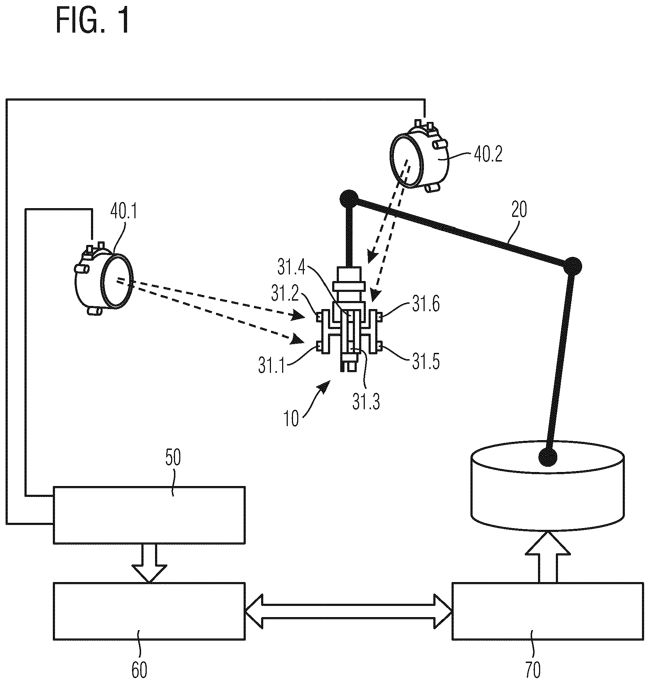

In Figur 1 ist in stark schematisierter Form ein optisches Positionsmesssystem dargestellt, das zur Bestimmung räumlicher Positionsinformationen bzw. zur Bestimmung der Position und Orientierung eines im Raum beweglichen Messobjekts geeignet ist; nachfolgend sei diesbezüglich auch von der Pose des Messobjekts die Rede. Im vorliegenden Beispiel ist als Messobjekt ein Messkopf 10 vorgesehen, der über eine lediglich schematisiert angedeutete Kinematik 20 im Raum positionierbar ist und dessen Pose mit Hilfe des optisches Positionsmesssystems bestimmt wird. Als Messkopf 10 kann z.B. ein bekannter schaltender Taster verwendet werden, der im Bearbeitungsraum einer Werkzeugmaschine über die Kinematik 20 positioniert wird, um ein gefertigtes Werkstück durch taktiles Antasten zu vermessen.

Das Positionsmesssystem besteht im vorliegenden Ausführungsbeispiel aus mehreren räumlichen 2D-Winkelmesssystemen, wie sie z.B. aus der eingangs zitierten Druckschrift WO 01/38828 A1 grundsätzlich bekannt sind. Ergänzend sei an dieser Stelle noch auf die EP 3 739 287 A1 sowie die EP 3 175 949 A1 hingewiesen, die jeweils die Anwendung derartiger 2D-Winkelmessysteme in speziellen optischen Positionsmesssystemen zeigen. Auf den Offenbarungsgehalt dieser Druckschriften und die darin enthaltenen Informationen zu Details geeigneter 2D-Winkelmesssysteme wird hiermit ausdrücklich Bezug genommen.

Das entsprechende Positionsmesssystem umfasst zur Posenbestimmung einerseits mehrere am Messkopf 10 angeordnete, identifizierbare Lichtquellen 31.1 - 31.6. Im dargestellten Beispiel sind insgesamt acht Lichtquellen 31.1 - 31.6 am Messkopf 10 vorgesehen, die paarweise um 90° versetzt um den Messkopf 10 angeordnet sind und von denen in der Figur lediglich sechs Lichtquellen 31.1 - 31.6 erkennbar sind. Andererseits umfasst das Positionsmesssystem mehrere erfindungsgemäße optische Empfangseinheiten 40.1, 40.2, die gegenüber den beweglichen Lichtquellen 31.1 - 31.6 am Messkopf 10 stationär angeordnet sind. Im dargestellten Ausführungsbeispiel sind lediglich zwei derartige optische Empfangseinheiten 40.1, 40.2 vorgesehen, selbstverständlich können auch mehr derartige Einheiten in einem solchen Positionsmesssystem zum Einsatz kommen; ebenso kann die Zahl der verwendeten Lichtquellen natürlich variieren. Die optischen Empfangseinheiten 40.1, 40.2 sind an geeigneten stationären Objekten angeordnet, beispielsweise an einem - nicht in den Figuren gezeigten - Maschinenrahmen.

Mit Hilfe der nachfolgend noch im Detail zu erläuternden optischen Empfangseinheiten 40.1, 40.2 kann jeweils für die entsprechende Empfangseinheit 40.1, 40.2 die Einfallsrichtung des von einer Lichtquelle 31.1 - 31.6 kommenden Lichtstrahls bzw. die Winkellage einer gemessenen Lichtquelle 31.1 - 31.6 erfasst werden. Ist zudem die Relativposition der beiden stationären Empfangseinheiten 40.1, 40.2 zueinander bekannt, so kann aus dem Schnittpunkt der bestimmten Einfallsrichtungen bzw. Sichtlinien zu den Lichtquellen 31.1 - 31.6 die Pose des Messkopfs 10 bestimmt werden. Hierzu werden die in den optischen Empfangseinheiten 40.1, 40.2 erzeugten Signale über eine Signalverarbeitungseinheit 50 aufbereitet und an eine Posenberechnungseinheit 60 übergeben, die daraus die räumliche Position und Orientierung bzw. Pose des Messkopfs 10 bestimmt. Diese Informationen können dann von einer Maschinensteuerung 70 genutzt werden, um den Messkopf 10 über die Kinematik 20 geeignet im Raum zu positionieren.

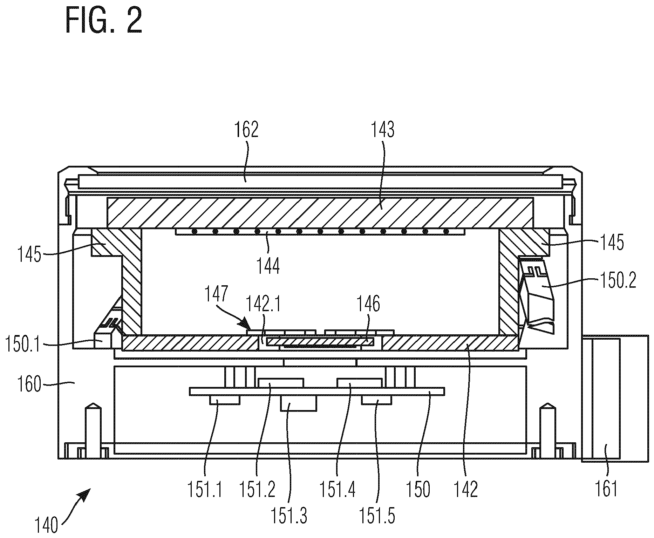

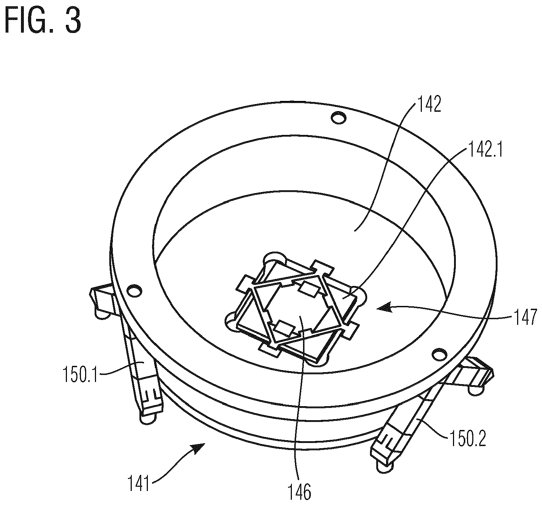

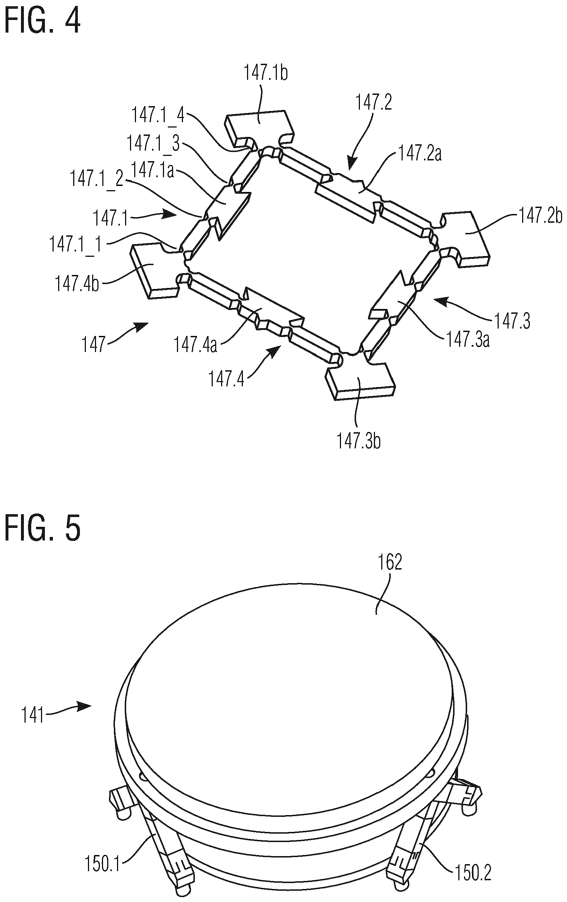

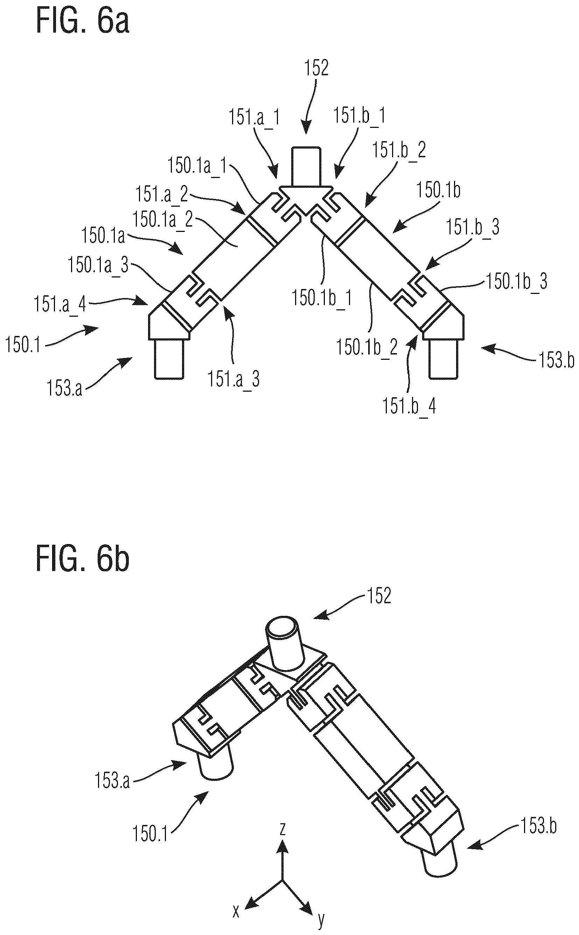

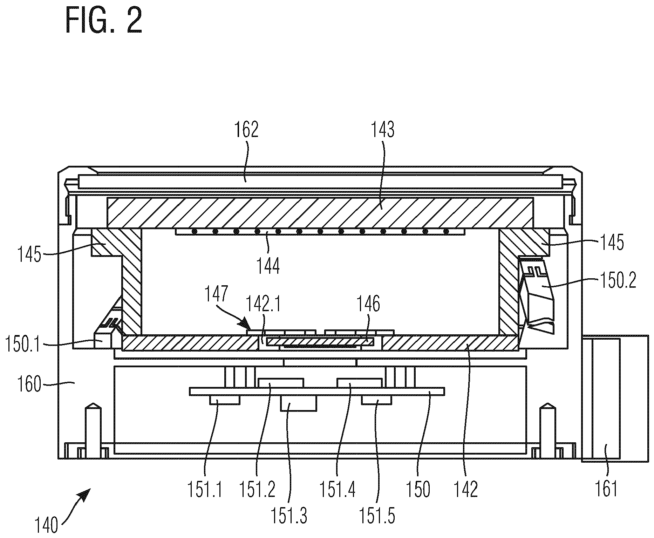

Anhand der weiteren Figuren wird nachfolgend ein Ausführungsbeispiel einer erfindungsgemäßen optischen Empfangseinheit 140 im Detail erläutert. Hierbei zeigt Figur 2 eine Schnittansicht der Empfangseinheit 140 mit einer Messzelle 141 und einem Montagegehäuse 160, Figur 3 und Figur 5 jeweils perspektivische Darstellungen der Messzelle 141 der Empfangseinheit 140 sowie die Figuren 4, 6a und 6b weitere Komponenten der Empfangseinheit 140.

Als maßgebliches funktionales Element weist die Empfangseinheit 140 eine in einem Montagegehäuse 160 angeordnete Messzelle 141 auf, deren Einzelkomponenten in Figur 2 schraffiert hervorgehoben sind. Die Messzelle 141 und das Montagegehäuse 160 sind jeweils zylinderförmig ausgebildet, wobei die Messzelle 141 geeignet kinematisch gelagert im Inneren des Montagegehäuses 160 angeordnet ist. Oberhalb der Messzelle 141 weist das Montagegehäuse 160 eine transparente Abdeckung 162 auf, die im wesentlichen zum Schutz der empfindlichen Messzelle 141 dient. Über das Montagegehäuse 160 kann die Empfangseinheit 140 lösbar an einem Objekt befestigt werden; hierzu sind im am äußeren Umfang des Montagegehäuses 160 ein oder mehrere zylindrische Bohrungen 161 vorgesehen, über die es mittels Schraubverbindungen am stationären Objekt befestigbar ist.

Die Messzelle 141 umfasst im wesentlichen eine Bodenplatte 142, eine transparente Deckplatte 143 mit einem Abtastgitter 144, ein oder mehrere Abstandshalter 145 zwischen der Bodenplatte 142 und der Deckplatte 143 sowie einen optoelektronischen Detektor 146; dessen lichtempfindliche Fläche ist in Richtung der Deckplatte 143 bzw. des Abtastgitters 144 orientiert. Das in Figur 2 lediglich schematisiert angedeutete Abtastgitter 144 ist auf derjenigen Seite der transparenten Deckplatte 143 angeordnet, die in Richtung des Detektors 146 orientiert ist.

Die Bodenplatte 142, der Abstandshalter 145 sowie die Deckplatte 143 der Messzelle 141 bestehen jeweils aus dem gleichen Material, das vorzugsweise einen möglichst kleinen thermischen Ausdehnungskoeffizienten besitzt. Im vorliegenden Beispiel wird Quarzglas als Material für diese Messzellen-Komponenten gewählt; alternativ wären auch andere Materialien geeignet, z.B. BK7-Glas. Darüber resultiert zum einen ein sehr steifer Aufbau der Messzelle 141; zum anderen ist über die identischen Materialien der verschiedenen Komponenten eine hohe thermische Invarianz der über die Messzelle 141 zu erfassenden Messgrößen gewährleistet, d.h. es ist darüber eine gewisse Stabilität gegenüber thermischen Einflüssen sichergestellt. Dies bedeutet, dass z.B. im Fall einer gleichmäßigen Temperaturerhöhung aufgrund der identischen thermischen Ausdehnungskoeffizienten aller Messzellen-Komponenten der Abstand zwischen dem Detektor 146 und dem Abtastgitter 144 sich in gleicher Weise vergrößert, wie sich das an der Deckplatte 143 angeordnete Abtastgitter 144 ausdehnt und dabei seine Gitterkonstante vergrößert. Auf diese Art und Weise bleibt auch bei Temperaturänderungen die über die Empfangseinheit 140 bestimmte Winkellage einer Lichtquelle in Bezug auf die Empfangseinheit 140 unverändert.

Mit Hilfe des optoelektronischen Detektors 146 wird ein in der Detektionsebene resultierendes periodisches Streifenmuster erfasst. Dieses entsteht aus der Wechselwirkung der von einer Lichtquelle emittierten Strahlenbündel mit dem Abtastgitter 144. Die Lage des Streifenmusters auf dem Detektor 146 hängt von der Einfallsrichtung der Strahlung der gemessenen Lichtquelle relativ zur Empfangseinheit 140 ab, so dass sich aus der Lage des Streifenmusters in der Detektionsebene die Winkellage der Lichtquelle bestimmen lässt. Bevorzugt ist das Abtastgitter 144 der Empfangseinheit 140 als zweidimensionales Kreuzgitter und der optoelektronische Detektor 146 als zweidimensionaler Detektor ausgeführt, der spalten- und zeilenweise angeordnete optoelektronische Detektorelemente aufweist.

Damit können aus der Lage des erzeugten zweidimensionalen Streifenmusters auf dem Detektor 146 zwei Einfallswinkel bestimmt werden, welche zu den Hauptrichtungen des zweidimensionalen Abtastgitters 144 ausgerichtet sind. Das heißt, über die Auswertung der Streifenmusterlage auf dem Detektor 146 kann messtechnisch für die entsprechende Empfangseinheit 140 die Einfallsrichtung des von der jeweiligen Lichtquelle kommenden Lichtstrahls bzw. die Winkellage der gemessenen Lichtquelle erfasst werden. Aus diesem Grund wird im Zusammenhang mit der entsprechenden Positionserfassungseinrichtung auch von einem räumlichen 2D-Winkelmesssystem gesprochen.

Zur Weiterverarbeitung der über den Detektor 146 erzeugten Signale sind auf einer Platine 150 unterhalb der Bodenplatte 142 der Messzelle 140 mehrere Signalverarbeitungsbausteine 151.1 - 151.5 in der optischen Empfangseinheit 140 angeordnet. Hierbei kann es sich z.B. um Verstärker-, A/D-Wandler- oder Leitungstreiber-Bausteine handeln.

Um de eingangs erwähnten Probleme im Fall thermischer Einflüsse auf die optische Empfangseinheit 140 zu vermeiden und insbesondere eine temperaturbedingte Änderung des Abstands und/oder der Relativposition zwischen Detektor 146 und Abtastgitter 144 zu verhindern, ist vorgesehen, den Detektor 146 über ein selbstzentrierendes Ausgleichselement 147 auf der Bodenplatte 142 der Messzelle 141 anzuordnen. Über diese Maßnahme können temperaturbedingte, unerwünschte Veränderungen der Relativlage zwischen Detektor 146 und Abtastgitter 144 vermieden werden, die sich aus den unterschiedlichen thermischen Ausdehnungskoeffizienten des Detektor-Materials Silizium und des Messzellen-Materials Quarzglas sowie ggf. des Detektor-Platinenmaterials ergeben. Derartige Verlagerungen würden ansonsten als Messfehler in die Bestimmung der Lichtquellen-Winkellage eingehen.

Das verwendete selbstzentrierende Ausgleichselement 147 stellt über seine Ausgestaltung sicher, dass sowohl eine laterale Änderung der Relativposition zwischen Bodenplatte 142 und Detektor 146 als auch eine Rotation des Detektors 146 um eine Achse verhindert wird, die senkrecht zur Detektor-Oberfläche orientiert ist. Derartige Bewegungen könnten dann resultieren, wenn thermische oder mechanische Einflüsse auf die Bodenplatte 142 der Messzelle 141 einwirken. Dehnt sich etwa der Detektor 146 gegenüber der Bodenplatte 142 der Messzelle 141 temperaturbedingt aus, so nimmt in der erfindungsgemäßen Lösung das selbstzentrierende Ausgleichselement 147 die entsprechende mechanische Verformung auf, der Detektor 146 als auch die Messzelle 141 hingegen werden nicht verformt.

Eine Rotation des Detektors 146 um Drehachsen, die in der Detektionsebene liegen, ist aufgrund der Ausbildung des Ausgleichselements 147 grundsätzlich noch möglich; derartige Bewegungen des Detektors 146 beeinflussen die Messgenauigkeit aber nicht wesentlich.

Im vorliegenden Ausführungsbeispiel besteht das Ausgleichselement 147, das in Figur 4 in einer perspektivischen Ansicht gezeigt ist, aus vier aneinandergrenzenden Streben 147.1 - 147.4, welche einen geschlossenen Flächenbereich umgeben. Als Material für das Ausgleichselement 147 ist hier Invar vorgesehen; alternativ wären auch andere Materialien wie z.B. Aluminium oder Stahl geeignet. Im dargestellten Beispiel sind die vier Streben 147.1 - 147.4 jeweils gleich lang, so dass ein quadratischer Flächenbereich von diesen umschlossen wird; auch in Bezug auf diese Geometrie wären natürlich auch alternative Varianten möglich. Die einzelnen Streben 147.1 - 147.4 weisen jeweils einen Detektor-Befestigungsbereich 147.1a - 147.4a sowie mehrere Verjüngungen 147.1_i, 147.1_ii, 147.1_iii, 147.1_iv auf; aus Gründen der Übersichtlichkeit sind in Figur 4 lediglich die im Beispiel vorgesehenen vier Verjüngungen 147.1_1, 147.1_2, 147.1_3, 147.1_4 der Strebe 147.1 mit Bezugszeichen versehen, bei den restlichen drei Streben 147.2 - 147.4 wurde auf eine Angabe von Bezugszeichen für die Streben verzichtet.

Im Grenzbereich benachbarter Streben 147.1 - 147.4 sind desweiteren jeweils Messzellen-Befestigungsbereiche 147.1b - 147.4b vorgesehen. Über die Detektor-Befestigungsbereiche 147.1a - 147.4a ist das Ausgleichselement 147 mit dem Detektor 146 jeweils über eine flächige Klebung verbunden; über eine weitere flächige Klebung in den Messzellen-Befestigungsbereichen 147.1b - 147.4b erfolgt jeweils die Verbindung des Ausgleichselements 147 mit der Bodenplatte der 142 der Messzelle 141.

Im dargestellten Beispiel weist jede Strebe 147.1 - 147.4 des Ausgleichselements 147 zwei mittige Verjüngungen 147.1_2, 147.1_3 auf, zwischen denen sich der jeweilige Detektor-Befestigungsbereich 147.1a - 147.4a befindet. Darüber hinaus sind bei jeder Strebe 147.1 - 147.4 noch je zwei äußere Verjüngungen 147.1_1, 147.1_4 benachbart zu den Messzellen-Befestigungsbereichen 147.1b - 147.4b vorgesehen.

Das Ausgleichselement 147 ist im vorliegenden Ausführungsbeispiel oberhalb einer quadratischen Ausnehmung 142.1 bzw. Vertiefung der Bodenplatte 142 angeordnet. Die Fläche der Ausnehmung 142.1 ist hierbei etwas größer gewählt als die Fläche des am Ausgleichselement 147 befestigten Detektors 146. Der durch die vier Streben 147.1 - 147.4 des Ausgleichselements 147 umschlossene, quadratische Flächenbereich hier ist um 45° gegenüber der quadratischen Ausnehmung 142.1 in der Bodenplatte 142 verdreht. Hierzu werden die vier Messzellen-Befestigungsbereiche 147.1b - 147.4b jeweils auf Höhe der Mitte der Ausnehmungs-Seiten mit der Bodenplatte 142 außerhalb der Ausnehmung 142.1 verklebt. Damit sind in diesem Beispiel die Seitenkanten des quadratischen Detektors 146 parallel zu den Ausnehmungs-Seiten in der Bodenplatte 142 ausgerichtet.

Die oben erwähnten Klebungen sind jeweils auf denjenigen Seiten der Messzellen-Befestigungsbereiche 147.1b - 147.4b und der Detektor-Befestigungsbereiche 147.1a - 147.4a vorgesehen, die in Richtung der Bodenplatte 142 der Messzelle 141 orientiert sind. Die lichtempfindliche Fläche des Detektors 146 ist damit in einer Ebene mit derjenigen Seite der Bodenplatte 142 angeordnet, welche in Richtung des Abtastgitters 144 orientiert ist; d.h. die Detektionsebene des Detektors 146 liegt damit auf gleicher Höhe wie die Oberseite der Bodenplatte 142 außerhalb der Ausnehmung 142.1. Im Fall einer Temperaturänderung ist aufgrund dieser Anordnung des Detektors 146 gewährleistet, dass dessen Lage unverändert bleibt und damit sich auch der Abstand zwischen dem Detektor 146 und dem Abtastgitter 144 nicht ändert und derart ggf. Messfehler verursacht werden.

Um zu vermeiden, dass die erfindungsgemäße optische Empfangseinheit 140 und insbesondere die Messzelle 141 über die Befestigung an einem stationären Objekt mechanisch deformiert wird, sind weitere Maßnahmen vorgesehen. So ist die Messzelle 141 über eine Hexapod-Anordnung mit mehreren Festkörpergelenk-Bipods 150.1, 150.2, 150.3 im Montagehäuse 160 angebunden. Im vorliegenden Beispiel wird dabei über drei tangential um den Umfang der zylinderförmigen Messzelle 141 angeordnete Festkörpergelenk-Bipods 150.1, 150.2, 150.3 eine kinematisch bestimmte Lagerung der Messzelle 141 im Montagegehäuse 160 gewährleistet. Die Messzelle 141 ist auf diese Art und Weise entkoppelt vom Montagegehäuse 160 in der Empfangseinheit 140 angeordnet; eventuelle mechanische Einflüsse auf das Montagegehäuse 160 wirken sich dadurch nicht auf die Messzelle 141 aus. Wird z.B. die Empfangseinheit 140 über das Montagehäuse 160 über mehrere Schraubverbindungen an einer unebenen Befestigungsfläche mit unterschiedlichen Drehmomenten festgeschraubt, so ist über die Anordnung und Ausbildung der Festkörpergelenk-Bipods 150.1, 150.2, 150.3 sichergestellt, dass es zu keiner Verformung der Messzelle 141 kommt.

Neben der Verringerung mechanischer Einflüsse auf die Messzelle 141 gewährleistet eine derartige Entkopplung von Messzelle 141 und Montagegehäuse 160 auch eine weitere Minimierung thermischer Einflüsse, wenn sich z.B. das Montagegehäuse über den Kontakt mit einem Maschinenrahmen erwärmt.

In den Figuren 6a und 6b ist einer der drei vorgesehenen Festkörpergelenk-Bipods 150.1 im Detail dargestellt. Als Material für die Festkörpergelenk-Bipods 150.1 ist im vorliegenden Beispiel jeweils Invar vorgesehen. Wie aus den Figuren ersichtlich, umfassen die Festkörpergelenk-Bipods jeweils zwei Beine 150.1a, 150.1b, die mehrere Beinabschnitte 150.1a_1, 150.1a_2, 150.1a_3, 150.1b_1, 150.1b_2, 150.1b_3 sowie mehrere Festkörpergelenke 151.a_1 - 151.a_4, 151.b_1 - 151.b_4 in Form von Blattfedern aufweisen. Pro Bein 150.1a, 150.1b sind jeweils drei Beinabschnitte 150.1a_1, 150.1a_2, 150.1a_3, 150.1b_1, 150.1b_2, 150.1b_3 und zwei Paare von Festkörpergelenken 151.a_1 - 151.a_4, 151.b_1 - 151.b_4 vorgesehen, die paarweise senkrecht zueinander orientiert sind.

Im Verbindungs-Bereich 152 der beiden Beine 150.1a, 150.1b sind die Festkörpergelenk-Bipods 150.1 an der Messzelle angebunden; an den freien Enden 153.a, 153.b der beiden Beine 150.1a, 150.1b werden die Festkörpergelenk-Bipods 150.1 an geeigneten Montagepunkten am Montagegehäuse angebunden bzw. befestigt. Die Befestigung erfolgt hierbei jeweils über in diesen Bereichen der Festkörpergelenk-Bipods 150.1 angeordnete Stifte, zu denen es passende Ausnehmungen in der Messzelle bzw. im Montagegehäuse gibt. Zwischen den jeweils äußeren Beinabschnitten 150.1a_1, 150.1a_3, 150.1b_1, 150.1b_3 und den Anbindungsbereichen 152, 153a, 153.b der Festkörpergelenk-Bipods sind jeweils ebenfalls Festkörpergelenke 151.a_1, 151.a_4, 151.b_1, 151.b_4 vorgesehen.

Über derart ausgebildete Festkörpergelenk-Bipods können somit jeweils zwei translatorische Bewegungsfreiheitsgrade der damit verbundenen Messzelle und des Montagegehäuses gesperrt werden, nämlich Translationen entlang der in Figur 6b mit z und y bezeichneten Richtungen. In den verbleibenden vier Bewegungsfreiheitsgraden ist eine Relativbeweglichkeit zwischen Messzelle und Montagegehäuse hingegen möglich; hierbei handelt es sich um Translationen entlang der x-Richtung sowie um Rotationsbewegungen um die drei Richtungen x, y und z.

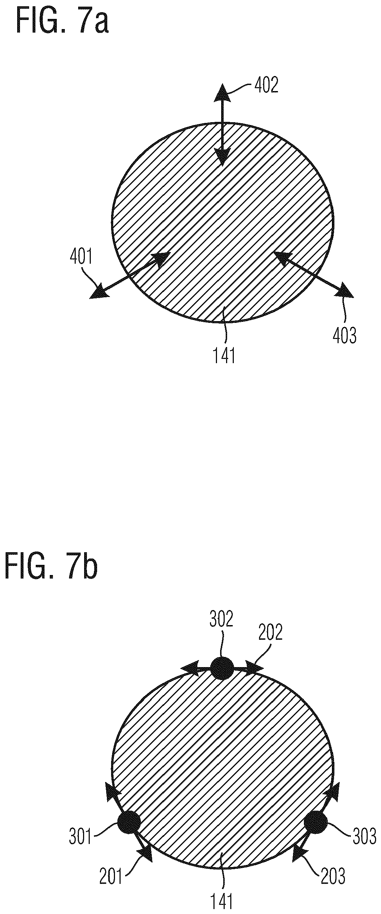

In der erfindungsgemäßen optischen Empfangseinheit sind drei derartige Festkörpergelenk-Bipods 150.1, 150.2, 150.3 in Winkelabständen von 120° um das Zentrum der Messzelle 141 herum angeordnet; hierbei erfolgt die Anordnung jeweils so, dass die Festkörpergelenk-Bipods 150.1, 150.2, 150.3 mit ihrer langen Ausdehnungsrichtung tangential zur Messzelle 141 angeordnet sind. Über das Zusammenwirken der drei Festkörpergelenk-Bipods 150.1, 150.2, 150.3 ist gewährleistet, dass die Messzelle 141 in keiner Raumrichtung mehr frei beweglich ist. In Figur 7b bezeichnen die Pfeile 201, 202, 203 jeweils die gesperrten Bewegungsfreiheitsgrade der Messzelle 141 in der Zeichenebene, die dunklen Kreise 301, 302, 303 bezeichnen die gesperrten Bewegungsfreiheitsgrade der Messzelle 141 senkrecht zur Zeichenebene.

Da jeder Festkörpergelenk-Bipod entlang der z-Richtung eine besonders hohe Steifigkeit aufweist, ist die Messzelle somit in Bezug auf Translationen entlang der z-Richtung sowie bezüglich Rotationen um die x- und y-Richtung eindeutig im Raum fixiert. Jeder Festkörpergelenk-Bipod weist zusätzlich auch noch in tangentialer Richtung zur Messzelle eine hohe Steifigkeit auf, weshalb somit auch keine Rotation der Messzelle um die z-Richtung erfolgen kann. Zusätzlich sind durch die Anordnung der Festkörpergelenk-Bipods unter 120° bzgl. des Messzellen-Zentrums und durch ihre tangentiale Anordnung auch die translatorischen Bewegungsfreiheitsgrade entlang der Richtungen x und y gesperrt.

Insgesamt ist die Messzelle somit im Raum eindeutig in allen sechs Bewegungsfreiheitsgraden bestimmt, d.h. die Messzelle kann sich in keiner Raumrichtung frei bewegen. Als Folge sind die Eigenfrequenzen der derart gelagerten Messzelle sehr hoch und erreichen in der Praxis ca. 2kHz. Der besondere Vorteil einer derartigen kinematischen Lagerung der Messzelle besteht darin, dass alle Festkörpergelenk-Bipods von der Messzelle aus gesehen in radialer Richtung sehr flexibel sind und somit nur sehr geringe Kräfte auf die Messzelle ausüben; hierzu sei auf die Figur 7a verwiesen, in der die Pfeile 401, 402, 403 die flexiblen Richtungen der drei Festkörpergelenk-Bipods bezeichnen. Wie somit aus dem Vergleich der Figuren 7a und 7b ersichtlich, besitzen die Festkörpergelenk-Bipods entlang ihrer tangentialen Anordnungsrichtung 201, 202, 203 eine höhere Steifigkeit als in einer hierzu orthogonalen Richtung 401, 402, 403. Dieser Vorteil bleibt auch dann erhalten, wenn sich die Montagepunkte der Beine der Festkörpergelenk-Bipods durch äußere Krafteinwirkung auf das Montagegehäuse oder durch thermische Ausdehnung ggf. verlagern.

Eine eventuelle, thermisch oder mechanisch bedingte Verlagerungsbewegung der Montagepunkte kann dabei in allen sechs Bewegungsfreiheitsgraden erfolgen, da sie vom jeweiligen Festkörpergelenk-Bipod durch die weichen Blattfedern abgefedert wird und keine Rückwirkungskräfte auf die Messzelle entstehen.

Die Rückstellkräfte vom Festkörpergelenk-Bipod auf die Messzelle bleiben trotz Verlagerung der Montagepunkte aufgrund der sehr geringen Steifigkeit in den Festkörpergelenken in diesen Richtungen gering. Nur entlang der Längserstreckungsrichtung der Beinabschnitte ist eine hohe Steifigkeit vorhanden. Die Messzelle wird somit nicht verformt. Folglich bleibt der Abstand zwischen dem Abtastgitter und dem Detektor in der Messzelle stets konstant und das Abtastgitter wird nicht durch Dehnungen oder Stauchungen unerwünscht verzerrt.

Neben dem erläuterten Ausführungsbeispiel der erfindungsgemäßen Vorrichtung gibt es im Rahmen der vorliegenden Erfindung selbstverständlich noch weitere Ausgestaltungsmöglichkeiten.

## Patentansprüche

1. Optische Empfangseinheit für ein Positionsmesssystem zur Bestimmung räumlicher Positionsinformationen, wobei die Empfangseinheit eine Messzelle aufweist, die eine Bodenplatte, eine transparente Deckplatte mit einem Abtastgitter, ein oder mehrere Abstandshalter zwischen der Bodenplatte und der Deckplatte sowie einen optoelektronischen Detektor umfasst, dessen lichtempfindliche Fläche in Richtung der Deckplatte orientiert ist,
**dadurch gekennzeichnet,**
**dass** der Detektor (146) über ein selbstzentrierendes Ausgleichselement (147) auf der Bodenplatte (142) der Messzelle (141) angeordnet ist.

2. Optische Empfangseinheit nach Anspruch 1, **dadurch gekennzeichnet, dass** über die Ausbildung des Ausgleichselements (147) sichergestellt ist, dass eine laterale Positionsänderung sowie eine Rotation des Detektors (146) um eine Achse, die senkrecht zur Detektor-Oberfläche orientiert ist, bei Einwirkung von thermischen oder mechanischen Einflüssen auf die Bodenplatte (142) verhindert wird.

3. Optische Empfangseinheit nach Anspruch 1 oder 2, **dadurch gekennzeichnet, dass**
- das Ausgleichselement (147) aus mehreren aneinandergrenzenden Streben (147.1 - 147.4) besteht, die einen geschlossenen Flächenbereich umgeben, und
- wobei die Streben (147.1 - 147.4) jeweils mindestens einen Detektor-Befestigungsbereich (147.1a - 147.4a) sowie mehrere Verjüngungs-Bereiche (147.1_1 - 147.1_4) aufweisen, und
- wobei das Ausgleichselement (147) desweiteren mehrere Messzellen-Befestigungsbereiche (147.1b - 147.4b) aufweist, die jeweils im Grenzbereich benachbarter Streben (147.1 - 147.4) ausgebildet sind.

4. Optische Empfangseinheit nach Anspruch 3, **dadurch gekennzeichnet, dass**
- das Ausgleichselement (147) über die Messzellen-Befestigungsbereiche (147.1b - 147.4b) oberhalb einer Ausnehmung (142.1) der Bodenplatte (142) angeordnet ist, und
- das Ausgleichselement (147) vier Streben (147.1b - 147.4b) mit je vier Verjüngungs-Bereichen (147.1_1 - 147.1_4) umfasst, und
- in den Ecken des Ausgleichselements (147) jeweils ein Messzellen-Befestigungsbereich (147.1b - 147.4b) ausgebildet ist, über den das Ausgleichselement (147) benachbart zur Ausnehmung (142.1) auf der Bodenplatte (142) befestigt ist, und
- jede Strebe (147.1 - 147.4) einen Detektor-Befestigungsbereich (147.1a
- 147.4a) zwischen zwei mittigen Verjüngungs-Bereichen (147.1_2, 147.1_3) aufweist, und
- jede Strebe (147.1 - 147.4) desweiteren zwei äußere Verjüngungs-Bereiche (147.1_1, 147.1_4) benachbart zu den Messzellen-Befestigungsbereichen (147.1b - 147.4b) aufweist.

5. Optische Empfangseinheit nach Anspruch 3 oder 4, **dadurch gekennzeichnet, dass**
- das Ausgleichselement (147) über die Messzellen-Befestigungsbereiche (147.1b - 147.4b) mit der Bodenplatte (142) flächig verklebt ist, und
- der Detektor (146) über die Detektor-Befestigungsbereiche (147.1a - 147.4a) mit dem Ausgleichselement (147) flächig verklebt ist.

6. Optische Empfangseinheit nach mindestens einem der vorhergehenden Ansprüche, **dadurch gekennzeichnet, dass** die lichtempfindliche Fläche des Detektors (146) in einer Ebene mit derjenigen Seite der Bodenplatte (142) angeordnet ist, welche in Richtung des Abtastgitters (144) orientiert ist.

7. Optische Empfangseinheit nach mindestens einem der vorhergehenden Ansprüche, **dadurch gekennzeichnet, dass** die Messzelle (141) über mehrere Festkörpergelenk-Bipods (150.1 - 150.3) in einem Montagegehäuse (160) gelagert angeordnet ist, wobei die Festkörpergelenk-Bipods (150.1 - 150.3) eine kinematisch bestimmte Lagerung der Messzelle (141) im Montagegehäuse (160) gewährleisten.

8. Optische Empfangseinheit nach Anspruch 7, **dadurch gekennzeichnet, dass**
- die Festkörpergelenk-Bipods (150.1 - 150.3) jeweils zwei Beine (150.1a, 150.1b) umfassen, die mehrere Beinabschnitte (150.1a_1, 150.1a_4, 150.1b_1, 150.1b_4) sowie mehrere Festkörpergelenke (151.a_1 - 151.a_4, 151.b_1 - 151.b_4) aufweisen, und
- die Festkörpergelenk-Bipods (150.1 - 150.3) im Verbindungs-Bereich der beiden Beine (150.1a, 150.1b) an der Messzelle (141) und mit den freien Enden der beiden Beine (150.1a, 150.1b) am Montagegehäuse (160) angebunden sind, und
- die Festkörpergelenk-Bipods (150.1 - 150.3) tangential zum Umfang der Messzelle (141) angeordnet sind.

9. Optische Empfangseinheit nach Anspruch 7 oder 8, **dadurch gekennzeichnet, dass** die Festkörpergelenk-Bipods (150.1 - 150.3) jeweils derart ausgebildet sind, dass zwei translatorische Bewegungsfreiheitsgrade gesperrt sind und lediglich eine Beweglichkeit in Bezug auf einen dritten translatorischen Bewegungsfreiheitsgrad sowie drei rotatorische Bewegungsfreiheitsgrade möglich ist.

10. Optische Empfangseinheit nach mindestens einem der Ansprüche 7 - 9, **dadurch gekennzeichnet, dass** drei Festkörpergelenk-Bipods (150.1 - 150.3) in Winkelabständen von 120° um das Zentrum der Messzelle (141) herum angeordnet sind, so dass durch das Zusammenwirken der drei Festkörpergelenk-Bipods (150.1 - 150.3) die Messzelle (141) in keiner Raumrichtung frei beweglich ist.

11. Optische Empfangseinheit nach Anspruch 10, **dadurch gekennzeichnet, dass** die Festkörpergelenk-Bipods (150.1 - 150.3) in Bezug auf die Messzelle (141) jeweils eine höhere Steifigkeit entlang ihrer tangentialen Anordnungsrichtung gegenüber der Steifigkeit in einer hierzu orthogonalen Richtung aufweisen.

12. Optische Empfangseinheit nach mindestens einem der Ansprüche 7 - 11, **dadurch gekennzeichnet, dass** die Festkörpergelenk-Bipods (150.1 - 150.3) aus Invar ausgebildet sind.

13. Optische Empfangseinheit nach mindestens einem der vorhergehenden Ansprüche, **dadurch gekennzeichnet, dass** die Bodenplatte (142), der mindestens eine Abstandshalter (145) sowie die Deckplatte (143) aus dem gleichen Material bestehen.

14. Optische Empfangseinheit nach mindestens einem der vorhergehenden Ansprüche, **dadurch gekennzeichnet, dass** das Abtastgitter (144) auf derjenigen Seite der Deckplatte (143) angeordnet ist, die in Richtung des Detektors (146) orientiert ist.

15. Optisches Positionsmesssystem zur Bestimmung der Position und Orientierung eines im Raum beweglichen Messobjekts, an dem mehrere identifizierbare Lichtquellen angeordnet sind, **gekennzeichnet durch** ein oder mehrere stationär angeordnete optische Empfangseinheiten (140) gemäß mindestens einem der vorhergehenden Ansprüche.

## Claims

1. Optical receiving unit for a position measuring system for determining spatial position information, wherein the receiving unit has a measuring cell which comprises a baseplate, a transparent top plate with a scanning grid, one or more spacers between the baseplate and the top plate, and an optoelectronic detector, the light-sensitive face of which faces the top plate,
**characterized in that**
the detector (146) is arranged on the baseplate (142) of the measuring cell (141) by way of a self-centring compensation element (147).

2. Optical receiving unit according to Claim 1, **characterized in that** the formation of the compensation element (147) ensures that a lateral change in position, and a rotation of the detector (146) about an axis oriented perpendicularly in relation to the detector surface, when thermal or mechanical influences are acting on the baseplate (142) is prevented.

3. Optical receiving unit according to Claim 1 or 2, **characterized in that**
- the compensation element (147) consists of multiple struts (147.1 - 147.4) which are adjacent to one another and surround a closed area, and
- wherein the struts (147.1 - 147.4) each have at least one detector fastening region (147.1a - 147.4a) and multiple tapering regions (147.1_1 - 147.1_4), and
- wherein the compensation element (147) also has multiple measuring-cell fastening regions (147.1b - 147.4b), which are each in the form of struts (147.1 - 147.4) that are adjacent in the boundary region.

4. Optical receiving unit according to Claim 3, **characterized in that**
- the compensation element (147) is arranged above a recess (142.1) in the baseplate (142) by way of the measuring-cell fastening regions (147.1b - 147.4b), and
- the compensation element (147) comprises four struts (147.1b - 147.4b) each with four tapering regions (147.1_1 - 147.1_4), and
- a measuring-cell fastening region (147.1b - 147.4b), via which the compensation element (147) is fastened on the baseplate (142) adjacently to the recess (142.1), is formed in each corner of the compensation element (147), and
- each strut (147.1 - 147.4) also has a detector fastening region (147.1a - 147.4a) between two central tapering regions (147.1_2, 147.1_3), and
- each strut (147.1 - 147.4) also has two outer tapering regions (147.1_1, 147.1_4) adjacent to the measuring-cell fastening regions (147.1b - 147.4b).

5. Optical receiving unit according to Claim 3 or 4, **characterized in that**
- the compensation element (147) is adhesively bonded over its surface area to the baseplate (142) by way of the measuring-cell fastening regions (147.1b - 147.4b), and
- the detector (146) is adhesively bonded over its surface area to the compensation element (147) by way of the detector fastening regions (147.1a - 147.4a).

6. Optical receiving unit according to at least one of the preceding claims, **characterized in that** the light-sensitive face of the detector (146) is arranged in a plane with that side of the baseplate (142) that faces towards the scanning grid (144).

7. Optical receiving unit according to at least one of the preceding claims, **characterized in that** the measuring cell (141) is arranged mounted in an assembly housing (160) by way of multiple flexure bipods (150.1 - 150.3), wherein the flexure bipods (150.1 - 150.3) ensure a kinematically determined mounting of the measuring cell (141) in the assembly housing (160).

8. Optical receiving unit according to Claim 7, **characterized in that**
- the flexure bipods (150.1 - 150.3) each comprise two legs (150.1a, 150.1b) which have multiple leg portions (150.1a_1, 150.1a_4, 150.1b_1, 150.1b_4) and multiple flexures (151.a_1 - 151.a_4, 151.b_1 - 151.b_4), and,
- in the connection region of the two legs (150.1a, 150.1b), the flexure bipods (150.1 - 150.3) are attached to the measuring cell (141) and, by way of the free ends of the two legs (150.1a, 150.1b), are attached to the assembly housing (160), and
- the flexure bipods (150.1 - 150.3) are arranged tangentially in relation to the circumference of the measuring cell (141).

9. Optical receiving unit according to Claim 7 or 8, **characterized in that** the flexure bipods (150.1 - 150.3) are each designed such that two translational degrees of freedom of movement are blocked and only one motion in relation to a third translational degree of freedom of movement and three rotational degrees of freedom of movement is possible.

10. Optical receiving unit according to at least one of Claims 7-9, **characterized in that** three flexure bipods (150.1 - 150.3) are arranged at angular spacings of 120° around the centre of the measuring cell (141), with the result that the measuring cell (141) is not freely movable in any spatial direction as a result of the interaction of the three flexure bipods (150.1 - 150.3).

11. Optical receiving unit according to Claim 10, **characterized in that** the flexure bipods (150.1 - 150.3) in relation to the measuring cell (141) each have a stiffness along their tangential arrangement direction that is higher than the stiffness in a direction orthogonal thereto.

12. Optical receiving unit according to at least one of Claims 7-11, **characterized in that** the flexure bipods (150.1 - 150.3) are made of Invar.

13. Optical receiving unit according to at least one of the preceding claims, **characterized in that** the baseplate (142), the at least one spacer (145) and the top plate (143) consist of the same material.

14. Optical receiving unit according to at least one of the preceding claims, **characterized in that** the scanning grid (144) is arranged on that side of the top plate (143) that faces the detector (146).

15. Optical position measuring system for determining the position and orientation of a spatially movable object for measurement, on which multiple identifiable light sources are arranged, **characterized by** one or more stationary optical receiving units (140) according to at least one of the preceding claims.

## Revendications

1. Unité de réception optique pour un système de mesure de position pour déterminer des informations de position dans l'espace, l'unité de réception présentant une cellule de mesure qui comprend une plaque de fond, une plaque de recouvrement transparente avec une grille de balayage, un ou plusieurs espaceurs entre la plaque de fond et la plaque de recouvrement, ainsi qu'un détecteur optoélectronique dont la surface photosensible est orientée en direction de la plaque de recouvrement,
**caractérisée en ce que**
le détecteur (146) est agencé sur la plaque de fond (142) de la cellule de mesure (141) par l'intermédiaire d'un élément d'équilibrage auto centrant (147).

2. Unité de réception optique selon la revendication 1, **caractérisée en ce que** la configuration de l'élément d'équilibrage (147) assure qu'un changement latéral de position ainsi qu'une rotation du détecteur (146) autour d'un axe orienté perpendiculairement à la surface du détecteur sont empêchés lors de l'action d'influences thermiques ou mécaniques sur la plaque de fond (142).

3. Unité de réception optique selon la revendication 1 ou 2, **caractérisée en ce que**
- l'élément d'équilibrage (147) est constitué de plusieurs entretoises (147.1-147.4) contiguës qui entourent une zone de surface fermée, et
- dans laquelle les entretoises (147.1-147.4) présentent chacune au moins une zone de fixation de détecteur (147.1a-147.4a) ainsi que plusieurs zones de rétrécissement (147.1_1-147.1_4), et
- dans laquelle l'élément d'équilibrage (147) présente en outre plusieurs zones de fixation de cellule de mesure (147.1b-147.4b) qui sont réalisées chacune dans la zone limite d'entretoises voisines (147.1-147.4).

4. Unité de réception optique selon la revendication 3, **caractérisée en ce que**
- l'élément d'équilibrage (147) est agencé au-dessus d'un évidement (142.1) de la plaque de fond (142) par l'intermédiaire des zones de fixation de cellule de mesure (147.1b-147.4b), et
- l'élément d'équilibrage (147) comprend quatre entretoises (147.1b-147.4b) avec quatre zones de rétrécissement (147.1_1-147.1_4) chacune, et
- dans chacun des coins de l'élément d'équilibrage (147) est réalisée une zone de fixation de cellule de mesure (147.1b-147.4b) par l'intermédiaire de laquelle l'élément d'équilibrage (147) est fixé sur la plaque de fond (142) au voisinage de l'évidement (142.1), et
- chaque entretoise (147.1-147.4) présente une zone de fixation de détecteur (147.1a-147.4a) entre deux zones de rétrécissement centrales (147.1_2, 147.1_3), et
- chaque entretoise (147.1-147.4) présente en outre deux zones de rétrécissement extérieures (147.1_1, 147.1_4) au voisinage des zones de fixation de cellule de mesure (147.1b-147.4b).

5. Unité de réception optique selon la revendication 3 ou 4, **caractérisée en ce que**
- l'élément d'équilibrage (147) est collé à plat à la plaque de fond (142) par l'intermédiaire des zones de fixation de cellule de mesure (147.1b-147.4b), et
- le détecteur (146) est collé à plat à l'élément d'équilibrage (147) par l'intermédiaire des zones de fixation de détecteur (147.1a-147.4a).

6. Unité de réception optique selon au moins l'une quelconque des revendications précédentes, **caractérisée en ce que** la surface photosensible du détecteur (146) est agencée dans un plan avec le côté de la plaque de fond (142) qui est orienté en direction de la grille de balayage (144).

7. Unité de réception optique selon au moins l'une quelconque des revendications précédentes, **caractérisée en ce que** la cellule de mesure (141) est agencée en étant montée dans un boîtier de montage (160) par l'intermédiaire de plusieurs bipodes à articulations monolithiques (150.1-150.3), les bipodes à articulations monolithiques (150.1-150.3) assurant un montage cinématiquement déterminé de la cellule de mesure (141) dans le boîtier de montage (160).

8. Unité de réception optique selon la revendication 7, **caractérisée en ce que**
- les bipodes à articulations monolithiques (150.1-150.3) comprennent chacun deux pieds (150.1a, 150.1b) qui présentent plusieurs sections de pieds (150.1a_1, 150.1a_4, 150.1b_1, 150.1b_4) ainsi que plusieurs articulations monolithiques (151.a_1-151.a_4, 151.b_1-151.b_4), et
- les bipodes à articulations monolithiques (150.1-150.3) sont reliés à la cellule de mesure (141) dans la zone de liaison des deux pieds (150.1a, 150.1b) et au boîtier de montage (160) par les extrémités libres des deux pieds (150.1a, 150.1b), et
- les bipodes à articulations monolithiques (150.1-150.3) sont agencés tangentiellement par rapport au périmètre de la cellule de mesure (141).

9. Unité de réception optique selon la revendication 7 ou 8, **caractérisée en ce que** les bipodes à articulations monolithiques (150.1-150.3) sont chacun réalisés de telle sorte que deux degrés de liberté de mouvement en translation sont bloqués et que seule une mobilité au regard d'un troisième degré de liberté de mouvement en translation ainsi que de trois degrés de liberté de mouvement en rotation est possible.

10. Unité de réception optique selon au moins l'une quelconque des revendications 7 à 9, **caractérisée en ce que** trois bipodes à articulations monolithiques (150.1 à 150.3) sont agencés à des distances angulaires de 120° autour du centre de la cellule de mesure (141), de telle sorte que la cellule de mesure (141) ne peut se déplacer librement dans aucune direction de l'espace sous l'effet de la coopération des trois bipodes à articulations monolithiques (150.1 à 150.3).

11. Unité de réception optique selon la revendication 10, **caractérisée en ce que** les bipodes à articulations monolithiques (150.1-150.3) présentent chacun, par rapport à la cellule de mesure (141), une plus grande rigidité le long de leur direction d'agencement tangentielle par rapport à la rigidité dans une direction orthogonale à celle-ci.

12. Unité de réception optique selon au moins l'une quelconque des revendications 7 à 11, **caractérisée en ce que** les bipodes à articulations monolithiques (150.1 à 150.3) sont réalisés en Invar.

13. Unité de réception optique selon au moins l'une quelconque des revendications précédentes, **caractérisée en ce que** la plaque de fond (142), l'au moins un espaceur (145) ainsi que la plaque de recouvrement (143) sont constitués du même matériau.

14. Unité de réception optique selon au moins l'une quelconque des revendications précédentes, **caractérisée en ce que** la grille de balayage (144) est agencée sur le côté de la plaque de couverture (143) qui est orienté en direction du détecteur (146).

15. Système de mesure de position optique pour déterminer la position et l'orientation d'un objet de mesure mobile dans l'espace, sur lequel sont agencées plusieurs sources de lumière identifiables, **caractérisé par** une ou plusieurs unités de réception optiques (140) selon au moins l'une quelconque des revendications précédentes, agencées de manière stationnaire.
